# EUROPÄISCHE PATENTSCHRIFT

(11) **EP 3 855 260 B1**
(45) Veröffentlichungstag und Bekanntmachung des Hinweises auf die Patenterteilung: **01.03.2023**
(21) Anmeldenummer: 20153152.2
(22) Anmeldetag: 22.01.2020
(51) Int. Cl.: G05B 19/042

(54) **VERFAHREN ZUR KONFIGURATION UND PARAMETRIERUNG VON FELDBUSTEILNEHMERN UND ENGINEERINGSYSTEM**
METHOD FOR CONFIGURING AND PARAMETRIZING FIELD BUS USERS AND ENGINEERING SYSTEM
PROCÉDÉ DE CONFIGURATION ET DE PARAMÉTRAGE DES PARTICIPANTS DE BUS DE TERRAIN ET SYSTÈME D'INGÉNIERIE

(43) Veröffentlichungstag der Anmeldung: 28.07.2021
(73) Patentinhaber: Siemens Aktiengesellschaft, 80333 München (DE)
(72) Erfinder: Pohle, Michael, 09125 Chemnitz (DE); Kemptner, Sebastian, 92269 Fensterbach - Dürnsricht (DE); Schneider, Dirk, 08115 Lichtentanne (DE)

(56) Entgegenhaltungen:
- DE-A1-102015 101 057
- DE-A1-102015 108 053
- US-B1- 6 449 715
- US-B1- 6 473 824

## Beschreibung

Die Erfindung betrifft ein Verfahren zur Konfiguration und Parametrierung von Feldbusteilnehmern, welche über einen Feldbus miteinander in Verbindung stehen, wobei zumindest ein erster Feldbusteilnehmer ausgestaltet ist, Prozessdaten zur Verfügung zu stellen und/oder entgegen zu nehmen und ein zweiter Feldbusteilnehmer ausgestaltet ist um ein Anwenderprogramm ablaufen zu lassen, wobei in einem ersten Schritt mit einem Konfigurationswerkzeug eine Topologie mit Konfigurationsparametern der Feldbusteilnehmer in einer Konfigurationsdatei festgelegt wird, und in einem zweiten Schritt der erste Feldbusteilnehmer für eine spätere Kommunikation über den Feldbus mit zumindest einem Konfigurationsdatensatz umfassend zumindest einen ersten Teil der Konfigurationsdatei parametriert wird.

Auch betrifft die Erfindung eine Engineering-Station zur Konfiguration und Parametrierung von Feldbusteilnehmern, welche über einen Feldbus miteinander in Verbindung stehen, wobei zumindest ein erster Feldbusteilnehmer ausgestaltet ist, Prozessdaten zur Verfügung zu stellen und/oder entgegen zu nehmen und ein zweiter Feldbusteilnehmer ausgestaltet ist, um ein Anwenderprogramm ablaufen zu lassen, umfassend:
Ein Konfigurationswerkzeug, welches ausgestaltet ist, in einem Editor eine Topologie mit Konfigurationsparametern der Feldbusteilnehmer in einer Konfigurationsdatei festzulegen, ein Parametrierwerkzeug, welches ausgestaltet ist, den ersten Feldbusteilnehmer für eine spätere Kommunikation über den Feldbus mit zumindest einem Konfigurations-Datensatz umfassend zumindest einen ersten Teil der Konfigurationsdatei zu parametrieren und zu laden.

Aus der EP 1 752 896 B1 ist ein Engineering System zum Parametrieren von Automatisierungsbaugruppen bekannt.

Auch die EP 2 482 148 B1 beschreibt ein Verfahren für die Projektierung und/oder Programmierung einer multifunktionalen Komponente einer industriellen Automatisierungsanordnung.

Die US 6 473 824 B1 zeigt ein Verfahren zur Konfiguration und Parametrierung von Feldbusteilnehmern, wobei eine objektorientierte Methode verwendet wird.

Die DE 10 2015 108 053 A1 zeigt ein Verfahren zum automatisierten Erfassen einer Topologie eines Feldbusnetzwerks.

Die US 6 449 715 B1 offenbart ein Verfahren und ein System um Profibus Geräte zu konfigurieren.

Als eine Engineering-Station ist beispielsweise auch das TIA-Portal der Firma Siemens AG bekannt. Das TIA-Portal ist ein Automatisierungs-Framework für die CPU-Familien der Simatic SPS. "TIA" steht für Totaly Integrated Automation". Im TIA-Portal sind alle notwendigen Software-Tools unter einer Bedienoberfläche vereint. Das TIA-Portal ermöglicht den vollständigen Zugriff auf die gesamte digitalisierte Automatisierung von einer digitalen Planung über integriertes Engineering bis zum transparenten Betrieb. Von den aufgezeigten Möglichkeiten profitieren sowohl Systemintegratoren und Maschinenbauer als auch Anlagenbetreiber. Ein TIA-Portal ist damit der perfekte Zugang zur Automatisierung in der digitalen Automatisierungswelt.

Eine Projektierung einer Anlage umfassend die Konfiguration und die Parametrierung sowie eine Programmierung und Ansteuerung beispielsweise von dezentralen Peripheriesystemen, ist mit dem TIA-Portal möglich. Als nachteilig wird allerdings empfunden, dass wenn man beispielsweise nur eine kleine Anlage konfigurieren oder parametrieren möchte, dass TIA-Portal für die "kleine" Lösung eine zu mächtige Softwarekomponente darstellt und gerade für einen ungeübten Inbetriebsetzer zu anspruchsvoll ist.

Es ist daher eine Aufgabe der Erfindung eine Lösung, insbesondere zum Parametrieren von dezentralen Peripheriegeräten, bereitzustellen, welche das Parametrieren, Konfigurieren und anschließende Inbetrieb nehmen vereinfacht.

Die Aufgabe wird durch die Merkmale der unabhängigen Ansprüche gelöst. Nach dem beschriebenen ersten Schritt und dem beschriebenen zweiten Schritt wird ein dritter Schritt ausgeführt, bei welchem aus der Konfigurationsdatei und weiteren Code-Anteilen aus einer Programmbibliothek eine objektorientierte Klasse mit Elementen und Funktionen für die Kommunikation zwischen dem zweiten Feldbusteilnehmer und dem ersten Feldbusteilnehmer generiert wird, wobei in einem sich anschließendem vierten Schritt die Klasse in dem Anwenderprogramm des zweiten Feldbusteilnehmers instanziiert wird und bei der Ausführung des Anwenderprogramms die Funktionen für die Kommunikation genutzt werden, wodurch der Zugriff auf die Prozessdaten ermöglicht wird. Eine Klasse stellt sodann einen kleinen "Code-Schnipsel" dar, welchen man leicht in ein Anwenderprogramm einfügen kann und mit entsprechenden 0++-Befehlen instanziiert werden kann.

Insbesondere im Hinblick auf eine Parametrierung von Profinet Feldbusteilnehmern werden die Feldbusteilnehmer in zumindest zwei der folgenden Arten unterteilt, eine IO-Controller Art und eine IO-Device Art, wobei die IO-Controller Art, die Art von Gerät ist, welches Steuerungsaufgaben übernimmt und in der das Anwenderprogramm zum Ablauf gebracht wird, und die IO-Device Art, die Art von Gerät ist, welches als Feldgerät von einem industriellen Prozess Daten entgegennimmt oder Daten an einen industriellen Prozess ausgibt, wobei es von den Geräten der IO-Controller Art kontrolliert wird, wobei zum Aufbau einer Maschen-Netz-Architektur mit einer Vielzahl solcher Geräte der bereits vorhandene Feldbus genutzt wird und mit dem Konfigurationswerkzeug eine Maschen-Netz-Topologie mit dem Konfigurationsparametern der Feldbusteilnehmer in einer Maschen-Konfigurationsdatei festgelegt werden, und wobei die Generierung der Klasse in eine Generierung einer Server-Klasse und in eine Generierung einer Client-Klasse aufgeteilt wird und in Feldbusteilnehmern der Art IO-Controller in dem Anwenderprogramm beide Klassen instanziiert werden, und in den Feldbusteilnehmern der Art IO-Device zumindest die Serverklasse instanziiert wird, wobei bei der Ausführung der jeweiligen Anwenderprogramme in den jeweiligen Feldbusteilnehmern nun durch die zusätzliche Server-Klasse und die zusätzliche Client-Klasse auch eine bidirektionale Kommunikation zwischen den Feldbusteilnehmern der IO-Controller Art durchgeführt wird, es wird demnach ein "Querverkehr" zwischen den Controllern möglich. Eine totale Vernetzung, also jeder spricht mit jedem, dadurch leicht auf ein vorhandenes Ethernet-Netzwerk parametriert werden. So erhält man eine neuartige Netz-Architektur im Hinblick auf die bisherigen Möglichkeiten der Kommunikation und Parametrierung von insbesondere dezentralen Peripherieteilnehmern. Nun ist im Prinzip ein Smart Grid für die kommunikative Anbindung sämtlicher Akteure in einem Feldbussystem möglich.

Für die Generierung der objektorientierten Klasse mit Elementen und Funktionen hat sich als vorteilhaft herausgestellt, wenn ein erster Quell-Code-Anteil, Code und Compille-Optionen zur Handhabung von unterschiedlichen zweiten Feldbusteilnehmern umfasst, wobei die zweiten Feldbusteilnehmer als Zielplattform unterschiedlicher Hardwareausprägung ausgestaltet sind, ein zweiter Quell-Code-Anteil, welcher Code von Schnittstellenbeschreibungen des ersten Feldbusteilnehmers umfasst, ein dritter Quell-Code-Anteil, welcher Code von Schnittstellenbeschreibungen zu IO-Mapping Klassen des ersten Feldbusteilnehmers umfasst, ein vierter Quell-Code-Anteil, welcher Code von Beschreibungen der Zusammenhänge zwischen den zuvor genannten Code-Teilen und den Konfigurationen bzw. Parametrierungen aller Feldbusteilnehmer hinsichtlich Device-Typen, IO-Modul-Typen oder IO-Submodul-Typen umfasst, ein fünfter Quell-Code-Anteil, welcher Code von Beschreibungen von unterschiedlichen Protokoll Tags für unterschiedliche Arten von Feldbuskommunikationen umfasst.

Die zuvor beschriebenen Code-Anteile sind vorzugsweise mit ihren Konfigurationsparametern einer Gerätestammdaten-Datei für die einzelnen Feldbusteilnehmer entnommen worden. Eine "GSD" oder "GSD-Datei" meint ebenfalls auch eine XML-basierte Form. Aufbauend auf eine GSD-Datei wurde mit Einführung der GSDML (General Station Description Markup Language) die Eigenschaft XML-basierter Dokument beliebige Hierarchiestufen bilden zu können, dazu genutzt, ein hierarchisches Gerätemodell abzubilden. GSD-Dateien oder GSDML-Schemadateien werden von dem PNO (Profinet Nutzer Organisation) Arbeitskreis erstellt, gepflegt und über einen PNO-Webserver zum Download bereitgestellt. Eine bestehende GSDML-Datei kann vorzugsweise mit Hilfe der Erfindung um Informationen für die Code-Generierung ergänzt werden, daraus entsteht eine GSDSMLe, also eine extended Datei, welche um C-Klassen für die Kommunikation erweitert worden ist.

Vorzugsweise wird das Einbetten eines generierten ProgrammCodes und eine Instanziierung mittels einer Softwareentwicklungsumgebung durchgeführt. Eine Softwareentwicklungsumgebung wird auch Integrated Development Environment (IDE) genannt. Beispielsweise könnte man als eine mögliche Softwareentwicklungsumgebung Eclipse verwenden. Eclipse ist ein quelloffenes Programmierwerkzeug zur Entwicklung von Software verschiedener Art. Ursprünglich wurde Eclipse als integrierte Entwicklungsumgebung (IDE) für die Programmiersprache Java genutzt, aber mittlerweile wird sie wegen ihrer Erweitbarkeit auch für viele andere Entwicklungsaufgaben eingesetzt. Wie z.B. hier zum Einbetten und Instanziieren des generierten ProgrammCodes in die entsprechenden Feldbusteilnehmer mit einem ablauffähigen Anwenderprogramm.

Verfahrensgemäß ist es weiterhin von Vorteil, wenn beim Festlegen der Topologie zum einen ein paralleler und unabhängiger Zugriff von zumindest zwei unterschiedlichen Feldbusteilnehmern der Art IO-Controller auf die Prozessdaten des gleichen Feldbusteilnehmers der Art IO-Device und zum anderen ein freies Zuordnen von Prozessdaten beliebiger Feldbusteilnehmer der Art IO-Device zu Feldbusteilnehmern der Art IO-Controller berücksichtigt wird und aus dieser Festlegung (Konfiguration) die Maschen-Konfigurationsdatei entsteht, mit Hilfe welcher die Serverklassen und die Clientklassen mit entsprechenden Zugriffsrechten und Zugriffswegen generiert werden.

Programmiertechnisch hat es sich als vorteilhafter herausgestellt, die generierte Klasse bzw. bei einer Generierung von Unterklassen folgenden Aufbau und folgende Leistungsmerkmale für die Klassen zu generieren, wobei die Klassen vorzugsweise in einer C++-Notation dargestellt werden:
Klasse: User Interface
   Welche zumindest einmal pro Feldbusteilnehmer verfügbar ist, sie enthält alle Zugriffsmöglichkeiten auf die IO-Module/Submodule des Feldbusteilnehmers umfassend Funktionen, welchen einen Zugriff über stationsweite eindeutige Symbole oder einen Zugriff über Modul-Steckplätze als Ganzes, oder auch Bitgranular zulassen, wobei auch Verknüpfungen mit Operatoren durchgeführt werden können.
Klasse: User Interface zu IO Mapping
   Welche zumindest einmal pro Feldbusteilnehmer verfügbar ist und Adressdaten des Feldbusteilnehmers enthält, und welche den Datenaustausch zwischen einer User Interface Klasse und einer Kommunikationsstack Klasse steuert.
Klasse: Kommunikationsstack
   Welche Aufrufe von Kommunikations-Methoden bzw. Funktionen eines Protokollstacks ausführt und damit den Kommunikationsaufbau zum Feldbusteilnehmer übernimmt.
Klasse: Netzwerkstack
   Welche einmal pro Feldbus generiert wird und von allen zuvor genannten Klassen gleichermaßen verwendet werden kann, vorzugsweise können hier andere Kommunikationsstack Klassen eingebettet werden.

Eine weitere denkbare Klasse, wäre die Klasse Simulation.

Diese Klasse ist einmal pro Feldbus-Device Typ/IO-ModulTyp/Submodul-Typ verfügbar. Sie enthält das Verhalten jedes Feldbus-Device-Typ/IO-Modul-Typ/Submodul-Typ. Innerhalb des Feldbusnetzwerkes/Stranges z.B. für eine PWM- oder Nocken-Funktion einer DQ-Baugruppe oder ein einfacher Ein-/Aus-Betrieb an einer Klemme eines IO-Moduls. Die Simulationsklasse findet alternativ zur Verwendung der Klasse User Interface zu IO-Mapping und Kommunikationsstack zum Zwecke der Simulation der Nutzdaten und Klemmwerte Anwendung. Sie ist nach oben an die Klasse User Interface angebunden. Sie ist nach unten an eine vom Anwender bereitzustellende Prozess-Simulations-Umgebung angebunden.

Die eingangs genannte Aufgabe wird ebenfalls durch eine Engineering-Station zur Konfiguration und Parametrierung von Feldbusteilnehmern, welche über einen Feldbus miteinander in Verbindung stehen, gelöst. Dabei enthält die Engineering Station neben dem bereits bekannten Konfigurationswerkzeug und dem bekannten Parametrierwerkzeug erfindungsgemäß einen Programm-Code-Generator, welcher ausgestaltet ist, aus der Konfigurationsdatei und weiteren Code-Anteilen aus einer Programm-Bibliothek eine objektorientierte Klasse mit Elementen und Funktionen für die Kommunikation zwischen dem zweiten Feldbusteilnehmer und dem ersten Feldbusteilnehmer zu generieren, wobei weiterhin ein Installierwerkzeug vorhanden ist, welches ausgestaltet ist, die Klasse in dem Anwenderprogramm des zweiten Feldbusteilnehmers zu instanziieren, wodurch bei der Ausführung des Anwenderprogramms die Funktion für die Kommunikation genutzt werden und der Zugriff auf die Prozessdaten dadurch ermöglicht wird.

In der Engineering Station weist die Programmbibliothek zumindest eines der folgenden Quell-Code-Anteile auf, einen ersten Quell-Code-Anteil, welcher Code und Compile-Optionen zur Handhabung von unterschiedlichen zweiten Feldbusteilnehmern umfasst, wobei die zweiten Feldbusteilnehmer als Zielplattform unterschiedlicher Hardwareausprägung ausgestaltet sind, einen zweiten Quell-Code Anteil, welcher Code von Schnittstellen Beschreibungen des ersten Feldbusteilnehmers umfasst, einen dritten Quell-Code-Anteil, welcher Code von Schnittstellen Beschreibungen zu IO-Mapping Klassen des ersten Feldbusteilnehmers umfasst, einen vierten Quell-Code-Anteil, welcher Code von Beschreibung der Zusammenhänge zwischen den zuvor genannten Code-Teilen und den Konfigurationen bzw. Parametrierungen aller Feldbusteilnehmern hinsichtlich Device-Typen, IO-Modul-Typen oder IO-Submodul-Typen umfasst, einen fünften Quell-Code-Anteil, welcher Code von Beschreibungen von unterschiedlichen Protokollstacks für unterschiedliche Arten von Feldbuskommunikationen umfasst.

Als besonderer Vorteil wird auch angesehen, dass es nun Quell-Code-Anteile gibt, welche die Feldbusteilnehmer beschreiben, wenn sie als Zielplattformen unterschiedlicher Hardware-Ausprägung ausgestaltet sind, so kann beispielsweise ein Feldbusteilnehmer der Marke Siemens als IoT 2040, ein herkömmlicher PC, ein Einplatinencomputer, ein Arduino oder eine beliebige Hardware für eine Kommunikation in einem Feldbus aufgrund der generierten Programmanteile bzw. der generierten C++-Klassen für eine Kommunikation am Feldbus ertüchtigt werden.

Für die Engineering-Station ist es von Vorteil, wenn die Programm-Bibliothek Gerätestammdaten-Dateien für die einzelnen Feldbusteilnehmer umfasst, welche charakteristische Kommunikationsmerkmale der Feldbusteilnehmer beschreiben.

Die Engineering Station ist ausgestaltet, um die Feldbusteilnehmer der Art IO-Controller oder IO-Device Art zu parametrieren und zu konfigurieren.

Ein Ausführungsbeispiel des erfindungsgemäßen Verfahrens und der erfindungsgemäßen Engineering-Station wird nachfolgend anhand der Zeichnungen näher erläutert. Dabei zeigt
- FIG 1: einen schematisierten Ablaufplan der Verfahrensschritte,
- FIG 2: eine Blockschaltbild-Darstellung zum Ablauf des Verfahrens und der Parametrierung von Feldbusteilnehmern,
- FIG 3: das Prinzip des Parametrierverfahrens bei Einsatz von unterschiedlichen Zielplattformen mit Hinzunahme einer Server Client Funktionalität,
- FIG 4: zeigt den Aufbau einer Maschen-Netz-Architektur einer Vielzahl an Feldbusteilnehmern, wobei das Netzwerk eine Maschen-Netztopologie aufweist,
- FIG 5: eine prinzipielle Struktur einer GSD-Datei und
- FIG 6: einen Aufbau eines modularen Feldgerätes mit zugehörigen Modulen.

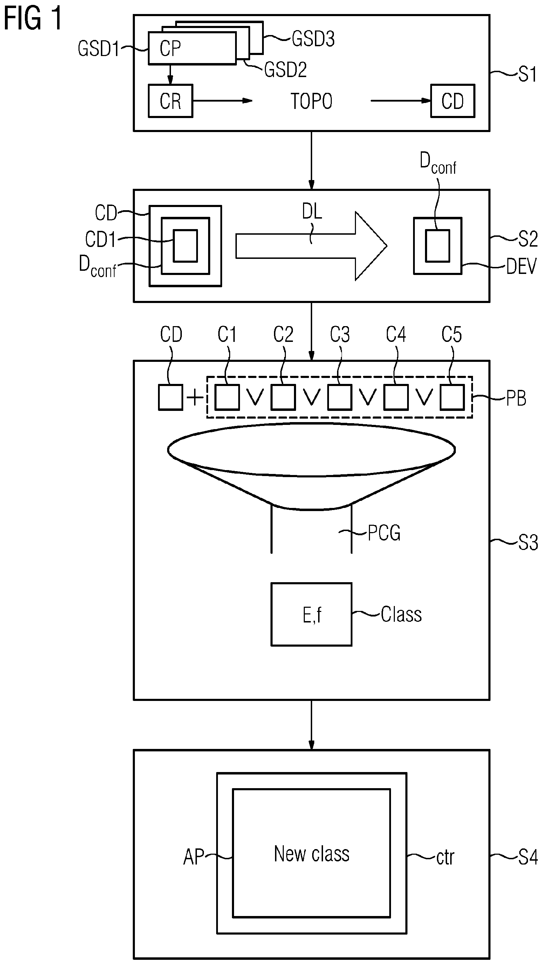

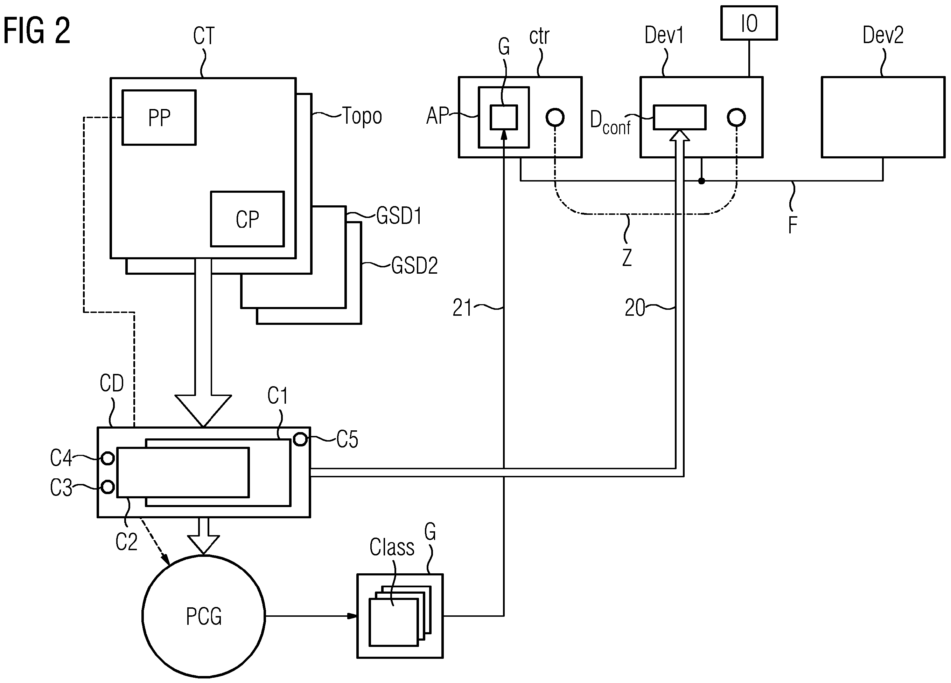

Gemäß FIG 1 ist der Verfahrensablauf zur Konfiguration und Parametrierung von Feldbusteilnehmern Ctr,Dev (siehe FIG 2) dargestellt. Mittels eines Konfigurationswerkzeuges CT (siehe FIG 2) wird in einem ersten Schritt S1 mit dem Konfigurationswerkzeug CT eine Topologie Topo mit Konfigurationsparametern CP der Feldbusteilnehmer Ctr,Dev in einer Konfigurationsdatei CT festgelegt. Das Konfigurationswerkzeug CT hat mittels einer ersten Gerätestammdaten-Datei GSD1, einer zweiten Gerätestammdaten-Datei GSD2 und einer dritten Gerätestammdaten-Datei GSD3 Kenntnis über den Aufbau der Feldbusteilnehmer Ctr,Dev.

In einem zweiten Schritt S2 wird der erste Feldbusteilnehmer Dev für eine spätere Kommunikation über den Feldbus F mit zumindest einem Konfigurationsdatensatz D_{conf} umfassend zumindest einen ersten Teil CD1 der Konfigurationsdatei CD parametriert. Der spezielle Konfigurationsdatensatz D_{conf} für den ersten Feldbusteilnehmer Dev wird über ein Download DL in den ersten Feldbusteilnehmer Dev geladen.

In einem dritten Schritt S3 wird aus der Konfigurationsdatei CD und weiteren Code-Anteilen C1,C2,C3,C4,C5 aus einer Programmbibliothek PB eine objektorientierte Klasse Clas mit Elementen E und Funktionen F für die Kommunikation zwischen dem zweiten Feldbusteilnehmer Ctr und dem ersten Feldbusteilnehmer Dev generiert. In dem dritten Schritt S3 wird zur Erzeugung eines Generats G ein Programm-Code-Generator generiert PCG genutzt, welcher ausgestaltet ist, aus der Konfigurationsdatei CD und den weiteren Code-Anteilen C1,...,C5 aus der Programm-Bibliothek PB die objektorientierte Klasse Class mit Elementen E und Funktionen F für die Kommunikation zwischen den Feldbusteilnehmern zu generieren.

In einem vierten Schritt S4 wird die Klasse Class in dem Anwenderprogramm AP des zweiten Feldbusteilnehmers Ctr instanziiert und bei der Ausführung des Anwenderprogramms AP die Funktionen F für die Kommunikation genutzt, wodurch der Zugriff Z auf die Prozessdaten IO ermöglicht wird. Zur Instanziierung der Klasse wird beispielsweise in dem Anwenderprogramm ein C++-Befehl "newclass" aufgerufen.

Die FIG 2 zeigt in einem Blockschaltbild das Erzeugen von objektorientierten Klassen Class mittels des Programm-Code-Generators PCG, wobei der Programm-Code-Generator PCG dann aktiv wird, wenn mittels des Konfigurationswerkzeuges CT eine Topologie Topo mit Konfigurationsparametern CP der Feldbusteilnehmer Ctr, Dev in einer Konfigurationsdatei CD festgelegt wurde. Unter Zuhilfenahme der Programm-Bibliothek PB und der unterschiedlichen Gerätestammdaten-Dateien GSD1,GSD2 wird die zukünftige Topologie Topo und Konfiguration der Feldbusteilnehmer Ctr,Dev1,Dev2 festgelegt. Die Konfigurations-Datei CD umfasst einen ersten Quell-Code-Anteil C1, einen zweiten Quell-Code-Anteil C2, einen dritten Quell-Code-Anteil C3 einen fünften Quell-Code-Anteil C4 und einen vierten Quell-Code-Anteil C5. Aus den Quell-Code-Anteilen C1,...,C5 und der Konfigurationsdatei CD generiert der Programm-Code-Generator PCG das Generat G welches die Klassen Class enthält.

Der erste Quell-Code-Anteil C1 umfasst Code und Compile Optionen zur Handhabung von unterschiedlichen zweiten Feldbusteilnehmern Ctr, wobei die zweiten Feldbusteilnehmer Ctr, als Zielplattform durchaus unterschiedliche Hardware-Ausprägungen aufweisen können. Der zweite Quell-Code-Anteil C2 umfasst Schnittstellenbeschreibungen des ersten Feldbusteilnehmers Dev. Der dritte Quell-Code-Anteil C3 umfasst Codes von Schnittstellenbeschreibungen zu IO-Mapping Klassen des ersten Feldbusteilnehmers Dev. Der vierte Quell-Code-Anteil C4 umfasst Beschreibungen der Zusammenhänge zwischen den zuvor genannten Code-Teilen und den Konfigurationen bzw. Parametrierungen aller Feldbusteilnehmer Ctr,Dev hinsichtlich Device-Typen, IO-Modul-Typen oder IO-Submodul-Typen. Der fünfte Quell-Code-Anteil C5 umfasst Beschreibungen von unterschiedlichen Protokollstacks für unterschiedliche Arten von Feldbuskommunikationen.

Das Generat G bzw. die Klassen Class werden über Laden 21 des Generates G in das Anwenderprogramm AP des Feldbusteilnehmers Ctr eingebettet. Der Konfigurationsdatensatz D_{conf} wird über einen Download 20 in den Feldbusteilnehmer Dev1 geladen.

Da nun die Klassen, in welchen insbesondere die Kommunikationsfunktionen realisiert sind, in dem Anwenderprogramm AP instanziiert wurden und zum Ablauf gebracht werden, kann eine Kommunikation zwischen den beiden Feldbusteilnehmern Ctr und Dev1 durch den Zugriff Z auf die Prozessdaten IO ermöglicht werden.

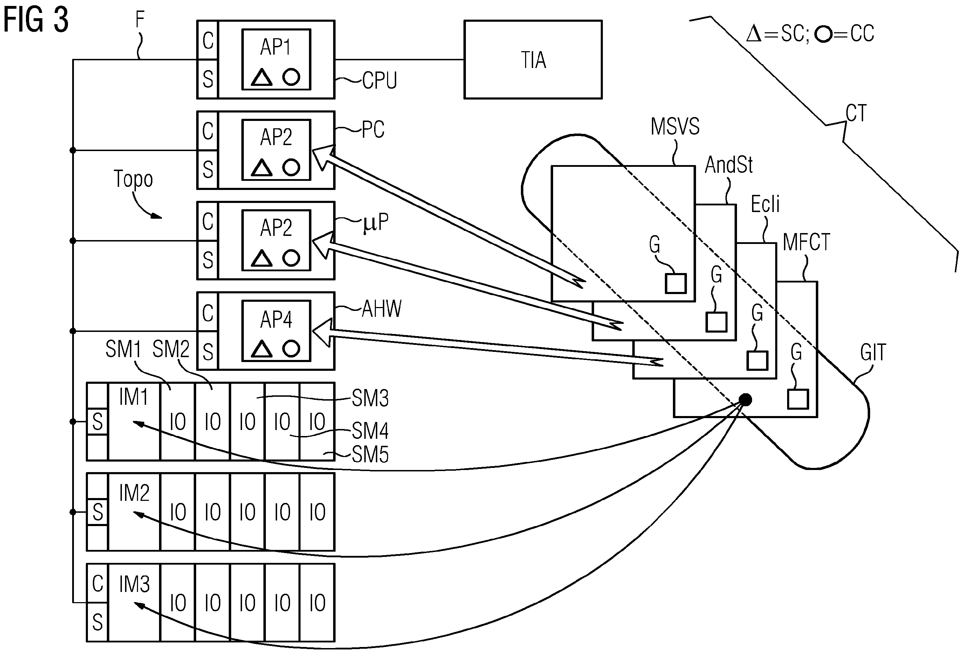

Gemäß FIG 3 ist eine erweiterte Feldbus F Konfiguration mit unterschiedlichen Feldbusteilnehmern Ctr dargestellt. Die Besonderheit bei dieser Konfiguration ist es, dass es nun Feldbusteilnehmer Ctr, Dev in zwei Arten gibt. Eine erste Art ist eine IO-Controller Art und eine zweite Art ist eine IO-Device Art. Die IO-Controller Art ist die Art von Gerät, welche Steuerungsaufgaben übernimmt und in der das Anwenderprogramm AP zum Ablauf gebracht wird. Demnach gibt es eine speicherprogrammierbare Steuerung CPU mit einem ersten Anwenderprogramm AP1, einen Personal Computer PC mit einem zweiten Anwenderprogramm AP2, einem Mikroprozessor µP (Einplatinen Computer), beispielsweise Arduino) mit einem dritten Anwenderprogramm AP3 und einem beliebigen Hardwarebaustein AHB (any Hardware) mit einem vierten Anwenderprogramm AP4.

Die zweite Art von Geräten, IO-Device Art, ist die Art von Geräten, welche als Feldgerät von einem industriellen Prozess Prozessdaten IO entgegennimmt oder Daten an einen industriellen Prozess ausgibt, wobei es von den Geräten der IO-Controller Art kontrolliert wird. Die genannten Feldgeräte sind als ein erstes Interface Modul IM1, ein zweites Interface Modul IM2 und ein drittes Interface Modul IM3 ausgestaltet. Die Interface Module IM1,IM2,IM3 sind als dezentrale Peripheriefeldgeräte mit Submodulen und Ein-/Ausgabebaugruppen für Prozessdaten IO ausgestaltet.

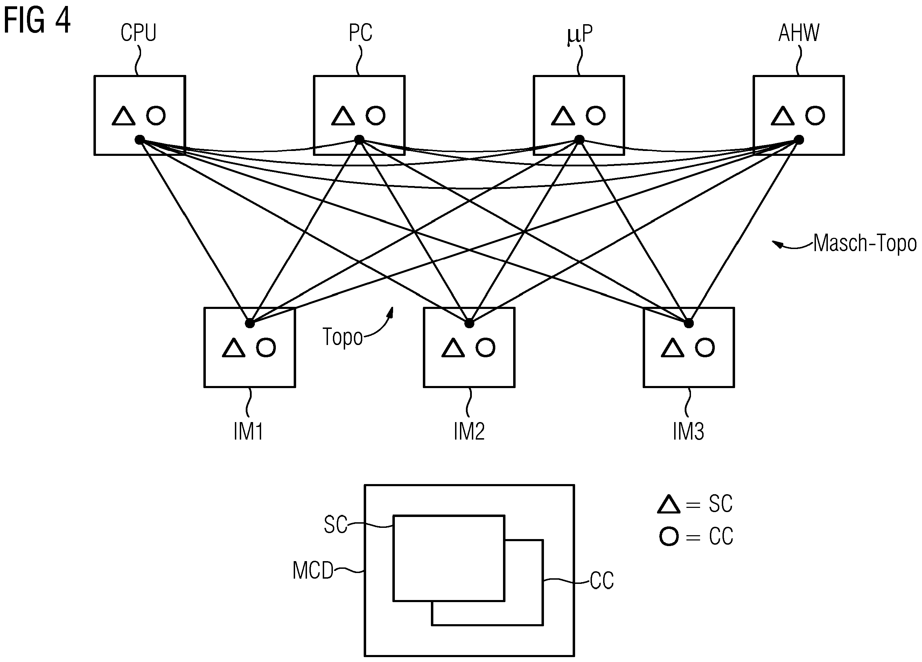

Durch die besondere Art der Klassenbildung, nämlich das jetzt mit dem Konfigurationswerkzeug CT eine Maschen-Netztopologie Masch-Topo mit den Konfigurationsparametern CP der Feldbusteilnehmer Ctr,Dev in einer Maschen-Konfigurationsdatei mCD (siehe FIG 4) festgelegt werden kann, und durch die Erweiterung das nun die Generierung der Klasse Class in eine Generierung einer Server-Klasse SC und in eine Generierung einer Client-Klasse CC aufgeteilt wird und insbesondere das in den Feldbusteilnehmern der Art IO-Controller in den Anwenderprogrammen AP1,...,AP4 die beiden Klassen SC,CC instanziiert werden, ist quasi eine vernetzte vermaschte Kommunikation zu jeden Teilnehmer möglich. Damit erhalten die Feldbusteilnehmer der IO-Controller Art eine Client-Funktionalität C und eine Server-Funktionalität S. Die Feldbusteilnehmer IO-Device Art können zwar auch jeweils eine Client-Funktionalität C und eine Server-Funktionalität S erhalten, siehe beispielsweise das dritte Interface-Modul IM3, sind aber in der Regel nur mit einer Server-Funktionalität S parametriert.

Eine Konfiguration und Parametrierung der speicherprogrammierbaren Steuerung CPU pasiert über ein TIA-Portal TIA, die Konfiguration des PC wird mittels einer Windows Entwicklungsumgebung MSVS durchgeführt, die Konfiguration des Mikroprozessors µP wird mittels eines plattformübergreifenden Entwicklungssystems ANDST durchgeführt, die Konfiguration der beliebigen Hardware AHW wird mittels einer C++ Entwicklungsumgebung Ecli durchgeführt und die Konfiguration der Interface-Module IM1,IM2,IM3 wird mittels eines multifunktionalen Konfigurationstools MFCT durchgeführt. All den genannten Konfigurationstools bzw. den damit generierten Generate G ist ein Dateiverwaltungstool GIT überlagert.

Die Interface-Module IM1,IM2,IM3 sind in ein erstes Submodul SM1, ein zweites Submodul SM2, ein drittes Submodul SM3, ein viertes Submodul SM4 und ein fünftes Submodul SM5 unterteilt. Ein Anwender kann mittels der Konfigurationswerkzeuge nun eine Konfiguration bestehend aus Anzahl und Art der für seine Anlage benötigten IO-Module/Sub-Module, z.B. DI8,DI16,DQ8, DQ32 oder Analog-Eingabe AI oder Analog-Ausgabe AQ oder Sondermodule TM, MPU etc. konfigurieren. Die Klasse User Interface erlaubt es im Zusammenspiel mit den generierten Klassen dem Anwender nun Zugriff auf Modul-Steckplätze und ihre Datenstruktur wie Bits, Bytes, Worte, Doppelworte, Senderstrukturen (z.B. 5-Byte-IEEE Analogwert) aus dem Anwenderprogramm durchzuführen.

Mit der FIG 4 wird nun die Vielseitigkeit des Verfahrens aufgezeigt. Denn, es ist nun möglich, dass jeder Feldbusteilnehmer mit jedem kommunizieren kann. Es wird eine Maschen-Netz-topologie MaschTopo mit dem Konfigurationswerkzeug CT aufgebaut. Das Erzeugen der Maschenkonfigurationsdatei mCD mit den darin enthaltenen Server-Klassen SC und den Client-Klassen CC erlaubt die entsprechenden Zugriffswege. Jeder Feldbusteilnehmer hat nun die Server-Klasse SC und die Client-Klasse CC.

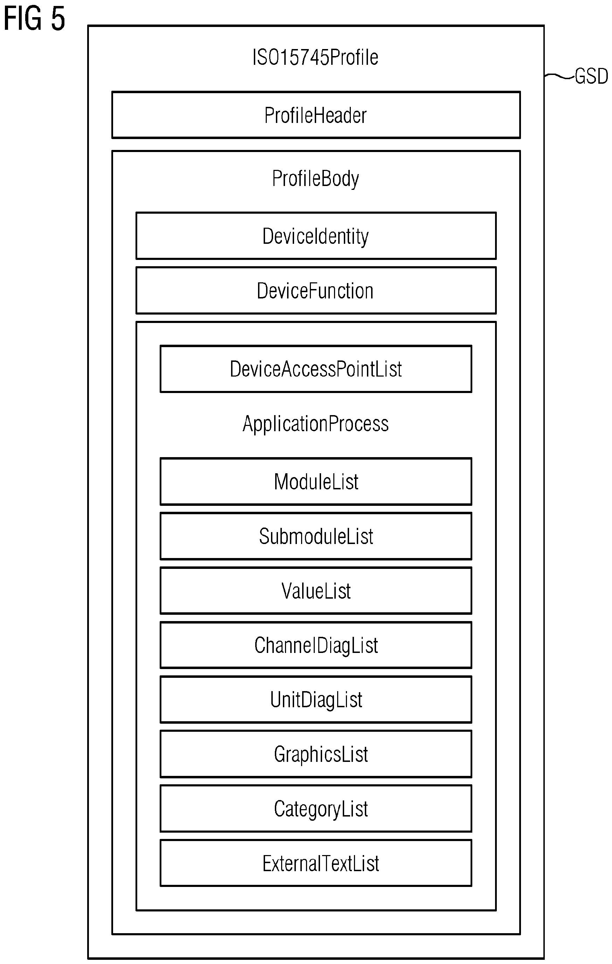

Die FIG 5 zeigt eine prinzipielle Struktur einer GSD-Datei. Das Profil einer Gerätestammdaten-Datei GSD ist in der Norm ISO 15745 festgelegt. Ein Profil Hader ist mit Profinet Device Profil und Spezifikationen zu belegen. Ein Profil Body enthält die eigentlichen Daten eines Feldgerätes und ist in drei Teile gegliedert. Eine Device Identy enthält Informationen zur Identifzierung eines Feldgerätes, eine Device Function enthält Daten, die die Funktionen beschreiben. Ein Application Process ist der Hauptteil der Beschreibungsdatei und "ApplicationProcess". Dies ist der Hauptteil der Beschreibungsdatei. Die wichtigsten Abschnitte des ApplicationProcess Blocks sind in den folgenden Unterkapiteln aufgelistet.

### DeviceAccessPointList

Dieser Abschnitt enthält die Beschreibung der einzelnen Device Access Points (Netzwerk-Zugangspunkt). Wie bereits erwähnt, kann eine GSD Datei die Beschreibung für beliebig viele Interfacemodule enthalten. Die Summe aller Device Access Points bildet dann eine Gerätefamilie. Der Ausbaugrad eines DAPs ist bei modularen Feldgeräten konfigurierbar. Jedem DAP können unterschiedliche Module (Baugruppen) zugeordnet werden.

### ModuleList

Dieser Abschnitt enthält die Beschreibung der einzelnen Module eines Feldgeräts. Diese können steckbar (bei modular aufgebauten Feldgeräten) oder fest in ein Feldgerät integriert sein.

### SubmoduleList

Dieser Abschnitt enthält die Beschreibung der einzelnen Submodule eines Feldgeräts. Diese können steckbar (bei modular aufgebauten Feldgeräten) oder fest in ein Feldgerät integriert sein.

### ValueList

Dieser Abschnitt enthält die ValueList für einzelne Parameter eines Feldgeräts, neben dem Parameternamen auch die Zuweisung zwischen einem konkreten Wert und einem zugehörigen Text.

### ChannelDiagList

Dieser Abschnitt enthält die ChannelDiagList. Sie stellt die Zuordnung zwischen einem Kanalfehler eines Feldgeräts und den entsprechenden Texten dar.

### UnitDiagTypeList

Dieser Abschnitt enthält die UnitDiagTypeList und beschreibt den strukturellen Aufbau der generischen Diagnosemeldungen eines Feldgeräts.

### LogBookEntryList

Die LogBookEntryList beschreibt die Bedeutung der Logbuch-Einträge.

### GraphicsList

Dieser Abschnitt enthält Referenzen auf grafische Repräsentationen eines Feldgeräts.

### CategoryList

Dieser Abschnitt enthält die Zuweisung eines Moduls zu einer bestimmten Kategorie (z.B. Digital Input, Analog Output, etc.). Diese dient zur Gliederung und besseren Auffindbarkeit innerhalb des Modulkatalogs eines Engineering-Tools.

### ExternalTextList

Dieser Abschnitt enthält die "ExternalTextList" der GSDML. Hier sind sämtliche Texte hinterlegt, die von den anderen Abschnitten referenziert werden können. Mehr dazu im Kapitel "Einbindung von Fremdsprachen".

In der Regel wird von bestehenden GSD-Dateien ausgegangen und diese werden an die eigenen Feldgeräte angepasst. Eine Ausgangsbasis stellen z.B. die Beispieldateien der PNO dar. Die sowohl der GSDML Spezifikation als auch dem Profinet XLM-Specification beigefügt sind.

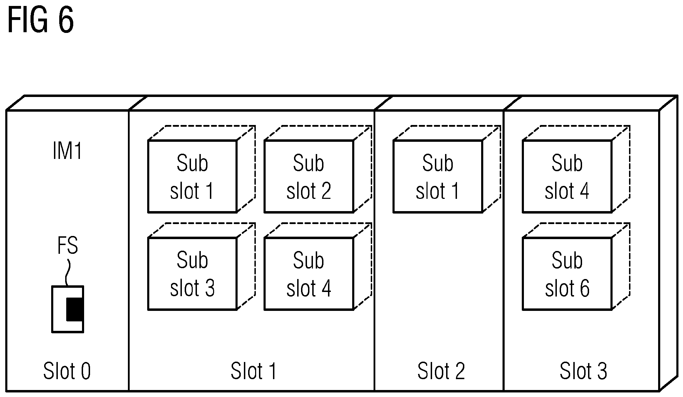

Mit der FIG 6 wird speziell eine Aufbauart der Interface-Module IM1,IM2,IM3 gezeigt. Ein Interface-Modul am Beispiel des ersten Interface-Moduls IM1 besitzt eine Feldbusschnittstelle FS, wobei der erste Abschnitt des Interface-Moduls als einen Slot 0 bezeichnet werden kann und dann weitere Slots Slot1,Slot2,Slot3 folgen. In einem Slot, beispielsweise im Slot 1 können wiederum Subslots SubSlot1,SubSlot2,SubSlot3, SubSlot4 parametriert werden. Der Slot 2 kann aber auch nur ein Subslot 1 enthalten oder der Slot 3 kann nur einen SubSlot 4 und einen SubSlot6 enthalten.

## Patentansprüche

1. Verfahren zur Konfiguration und Parametrierung von Feldbusteilnehmern (Ctr,Dev), welche über einen Feldbus (F) miteinander in Verbindung stehen, wobei zumindest ein erster Feldbusteilnehmer (Dev) ausgestaltet ist Prozessdaten (IO) zur Verfügung zu stellen und/oder entgegenzunehmen und ein zweiter Feldbusteilnehmer (Ctr) ausgestaltet ist um ein Anwenderprogramm (AP) ablaufen zu lassen, wobei in
- einem ersten Schritt (S1) mit einem Konfigurationswerkzeug (CT) eine Topologie (Topo) mit Konfigurationsparametern (CP) der Feldbusteilnehmern (Ctr,Dev) in einer Konfigurationsdatei (CD) festgelegt wird, und in
- einem zweiten Schritt (S2) der erste Feldbusteilnehmer (Dev) für eine spätere Kommunikation über den Feldbus (F) mit zumindest einem Konfigurations-Datensatz (Dconf) umfassend zumindest einen ersten Teil (CD1) der Konfigurationsdatei (CD) parametriert wird,
- einem dritten Schritt (S3) aus der Konfigurationsdatei (CD) und weiteren Code-Anteilen (C1,..,C5) aus einer Programm-Bibliothek (PB) eine objektorientierte Klasse (class) mit Elementen (E) und Funktionen (f) für die Kommunikation zwischen dem zweiten Feldbusteilnehmer (Ctr) und dem ersten Feldbusteilnehmer (Dev) generiert wird, wobei in
- einem vierten Schritt (S4) die Klasse (class) in dem Anwenderprogramm (AP) des zweiten Feldbusteilnehmers (Ctr) instanziiert wird und bei der Ausführung des Anwenderprogramms (AP) die Funktionen (f) für die Kommunikation genutzt werden, wodurch der Zugriff (Z) auf die Prozessdaten (IO) ermöglicht wird,
wobei die Feldbusteilnehmer (Ctr,Dev) in zwei der folgenden Arten unterteilt werden,
eine IO-Controller Art für den zweiten Feldbusteilnehmer (Ctr) und
eine IO-Device Art für den ersten Feldbusteilnehmer (Dev), wobei
- die IO-Controller Art, die Art von Gerät ist, welche Steuerungsaufgaben übernimmt und in der das Anwenderprogramm (AP) zum Ablauf gebracht wird, und
- die IO-Device Art, die Art von Gerät ist, welches als Feldgerät von einem industriellen Prozess Daten entgegennimmt oder Daten an einen industriellen Prozess ausgibt, wobei es von den Geräten der IO-Controller Art kontrolliert wird,
**dadurch gekennzeichnet, dass**
- mit dem Konfigurationswerkzeug (CT) eine Maschen-Netz-Topologie (Masch-Topo) mit den Konfigurationsparametern (CP) der Feldbusteilnehmern (Ctr,Dev) in einer Maschen-Konfigurationsdatei (mCD) festgelegt werden, und wobei
- die Generierung der Klasse (class) in eine Generierung einer Server-Klasse (SC) und in eine Generierung einer Client-Klasse (CC) aufgeteilt wird und in
- Feldbusteilnehmern der Art IO-Controller in dem Anwenderprogramm (AP) beide Klassen (SC,CC) instanziiert werden, und in den
- Feldbusteilnehmern der Art IO-Device zumindest die Server-Klasse (SC) instanziiert wird.

2. Verfahren nach Anspruch 1, wobei die weiteren Code-Anteile (C1,...,C5) folgende Quell-Code-Anteile umfassen:
- einen ersten Quell-Code-Anteil (C1), welcher Code und Compile-Optionen zur Handhabung von unterschiedlichen zweiten Feldbusteilnehmern (Ctr) umfasst, wobei die zweiten Feldbusteilnehmer (Ctr) als Zielplattform unterschiedlicher Hardwareausprägung ausgestaltet sind,
- einen zweiten Quell-Code Anteil (C2), welcher Code von Schnittstellen Beschreibungen des ersten Feldbusteilnehmers (Dev) umfasst,
- einen dritten Quell-Code-Anteil (C3), welcher Code von Schnittstellen Beschreibungen zu IO-Mapping Klassen des ersten Feldbusteilnehmers (Dev) umfasst,
- einen vierten Quell-Code-Anteil (C4), welcher Code von einer Beschreibung von den Konfigurationen und Parametrierungen aller Feldbusteilnehmern (Ctr,Dev) hinsichtlich Device-Typen, IO-Modul-Typen oder IO-Submodul-Typen umfasst,
- einen fünften Quell-Code-Anteil (C5), welcher Code von Beschreibungen von unterschiedlichen Protokollstacks für unterschiedliche Arten von Feldbuskommunikationen umfasst.

3. Verfahren nach Anspruch 1 oder 2, wobei die Konfigurationsparameter (CP) einer Gerätestammdaten-Datei (GSD) für die einzelnen Feldbusteilnehmer (C,D) entnommen werden.

4. Verfahren nach einem der Ansprüche 1 bis 3, wobei ein Einbetten eines generierten Programmcodes (G) und eine Instanziierung mittels einer Softwareentwicklungsumgebung (IDE) durchgeführt wird.

5. Verfahren nach einem der Ansprüche 1 bis 4, wobei
- zum Aufbau einer Maschen-Netz-Architektur einer Vielzahl solcher Geräte der bereits vorhandene Feldbus (F) genutzt wird, und
wobei bei der Ausführung der jeweiligen Anwenderprogramme (AP1,..,AP4) in den jeweiligen Feldbusteilnehmern (Ctr,Dev) nun durch die zusätzliche Server-Klasse (SC) und die zusätzliche Client-Klasse (CC) auch eine bidirektionale Kommunikation zwischen den Feldbusteilnehmern (Ctr, Dev) der IO-Controller Art durchgeführt wird.

6. Verfahren nach Anspruch 5, wobei beim Festlegen der Topologie (Topo) zum einen
- ein paralleler und unabhängiger Zugriff (Z) von zumindest zwei unterschiedlichen Feldbusteilnehmer (Ctr) der Art IO-Controller auf die Prozessdaten (IO) des gleichen Feldbusteilnehmers (Dev) der Art IO-Device Art und zum anderen
- ein freies Zuordnen von Prozessdaten (IO) beliebiger Feldbusteilnehmer (Dev) der Art IO-Device zu Feldbusteilnehmern (Ctr) der Art IO-Controller
berücksichtigt wird und aus den daraus festgelegten Maschen-Konfigurationsdatei (mCD) die Server-Klassen (SC) und die Client-Klasse (CC) mit entsprechenden Zugriffsrechten und Zugriffswegen generiert werden.

7. Verfahren nach einem der Ansprüche Anspruch 1 bis 6, wobei die generierte Klasse (class) und bei einer Generierung von Unterklassen folgender Aufbau und Leistungsmerkmale für die Klassen generiert werden, wobei die Klassen vorzugsweise in einer C++ Notation dargestellt werden:
- Klasse: User Interface, welche zumindest einmal pro Feldbusteilnehmer (Dev) verfügbar ist, sie enthält alle Zugriffsmöglichkeiten auf IO-Module/Submodule des Feldbusteilnehmers (Dev) umfassend Funktionen, welchen einen Zugriff über stationsweite eindeutige Symbole oder einen Zugriff über Modul-Steckplätze als Ganzes, oder auch Bitgranular zulassen, wobei auch Verknüpfungen mit Operatoren durchgeführt werden können,
- Klasse: User Interface zu IO Mapping, welche zumindest einmal pro Feldbusteilnehmer (Dev) verfügbar ist und Adressdaten des Feldbusteilnehmers (Dev) enthält, und welche den Datenaustausch zwischen User Interface Klasse und einer Kommunikationsstack Klasse steuert,
- Klasse: Kommunikationsstack, welche Aufrufe von Kommunikations-Methoden bzw. Funktionen eines Protokollstacks ausführt und damit den Kommunikationsaufbau zum Feldbusteilnehmer (Dev) übernimmt,
- Klasse: Netzwerkstack, welche einmal pro Feldbus (F) generiert wird und von allen zuvor genannten Klassen gleichermaßen verwendet werden kann, vorzugsweise können hier andere Kommunikationsstack Klassen eingebettet werden.

8. Engineering-Station zur Konfiguration und Parametrierung von Feldbusteilnehmern(Ctr,Dev), welche über einen Feldbus (F) miteinander in Verbindung stehen, wobei zumindest ein erster Feldbusteilnehmer (Dev) ausgestaltet ist Prozessdaten (IO) zur Verfügung zu stellen und/oder entgegenzunehmen und ein zweiter Feldbusteilnehmer (Ctr) ausgestaltet ist um ein Anwenderprogramm (AP) ablaufen zu lassen, wobei die Engineering-Station folgendes aufweist:
ein Konfigurationswerkzeug (CT), welches ausgestaltet ist in einem Editor eine Topologie (Topo) mit Konfigurationsparametern (CP) der Feldbusteilnehmern (Ctr,Dev) in einer Konfigurationsdatei (CD) festzulegen, ein Parametrierwerkzeug (PT), welches ausgestaltet ist den ersten Feldbusteilnehmer (Dev) für eine spätere Kommunikation über den Feldbus (F) mit zumindest einem Konfigurations-Datensatz (Dconf) umfassend zumindest einen ersten Teil (CD1) der Konfigurationsdatei (CD) zu parametrieren und zu laden, einen Programmcodegenerator (PCG), welcher ausgestaltet ist aus der Konfigurationsdatei (CD) und weiteren Code-Anteilen (C1,..,C5) aus einer Programm-Bibliothek (PB) eine objektorientierte Klasse (class) mit Elementen (E) und Funktionen (f) für die Kommunikation zwischen dem zweiten Feldbusteilnehmer (Ctr) und dem ersten Feldbusteilnehmer (Dev) zu generieren, wobei weiterhin ein
Installierwerkzeug (S4) vorhanden ist, welches ausgestaltet ist, die Klasse (class) in dem Anwenderprogramm (AP) des zweiten Feldbusteilnehmers (C) zu instanziieren, wodurch bei der Ausführung des Anwenderprogramms (AP) die Funktionen (f) für die Kommunikation genutzt werden und der Zugriff (Z) auf die Prozessdaten (IO) dadurch ermöglicht wird,
wobei die Feldbusteilnehmer (Ctr,Dev) in zwei der folgenden Arten unterteilt sind,
eine IO-Controller Art für den zweiten Feldbusteilnehmer (Ctr),
eine IO-Device Art für den ersten Feldbusteilnehmer (Dev), wobei
- die IO-Controller Art, die Art von Gerät ist, welche Steuerungsaufgaben übernimmt und in der das Anwenderprogramm (AP) zum Ablauf gebracht wird, und
- die IO-Device Art, die Art von Gerät ist, welches als Feldgerät von einem industriellen Prozess Daten entgegennimmt oder Daten an einen industriellen Prozess ausgibt, wobei es von den Geräten der IO-Controller Art kontrolliert wird, **dadurch gekennzeichnet, dass** das Konfigurationswerkzeug (CT) dazu eingerichtet ist,
eine Maschen-Netz-Topologie (Masch-Topo) mit den Konfigurationsparametern (CP) der Feldbusteilnehmern (Ctr,Dev) in einer Maschen-Konfigurationsdatei (mCD) festzulegen, und wobei vorgesehen ist,
dass die Generierung der Klasse (class) in eine Generierung einer Server-Klasse (SC) und in eine Generierung einer Client-Klasse (CC) aufgeteilt wird, dass in dem Feldbusteilnehmer der Art IO-Controller in dem Anwenderprogramm (AP) beide Klassen (SC,CC) instanziiert werden, und dass in dem Feldbusteilnehmer der Art IO-Device zumindest die Server-Klasse (SC) instanziiert wird.

9. Engineering-Station nach Anspruch 8, wobei die Programm-Bibliothek (PB) zumindest eines der folgenden Quell-Code-Anteile (C1,C2,C3,C4) umfasst:
- einen ersten Quell-Code-Anteil (C1), welcher Code und Compile-Optionen zur Handhabung von unterschiedlichen zweiten Feldbusteilnehmern (Ctr) umfasst, wobei die zweiten Feldbusteilnehmer (Ctr) als Zielplattform unterschiedlicher Hardwareausprägung ausgestaltet sind,
- einen zweiten Quell-Code Anteil (C2), welcher Code von Schnittstellen Beschreibungen des ersten Feldbusteilnehmers (Dev) umfasst,
- einen dritten Quell-Code-Anteil (C3), welcher Code von Schnittstellen Beschreibungen zu IO-Mapping Klassen des ersten Feldbusteilnehmers (Dev) umfasst,
- einen vierten Quell-Code-Anteil (C4), welcher Code von Beschreibung der Zusammenhänge zwischen den zuvor genannten Code-Teilen und den Konfigurationen bzw. Parametrierungen aller Feldbusteilnehmern (Ctr,Dev) hinsichtlich Device-Typen, IO-Modul-Typen oder IO-Submodul-Typen umfasst,
- einen fünften Quell-Code-Anteil (C5), welcher Code von Beschreibungen von unterschiedlichen Protokollstacks für unterschiedliche Arten von Feldbuskommunikationen umfasst.

10. Engineering-Station nach Anspruch 8 oder 9, wobei die Programm-Bibliothek (PB) Gerätestammdaten-Dateien (GSD) für die einzelnen Feldbusteilnehmer (C,D) umfasst, welche charakteristische Kommunikationsmerkmale der Feldbusteilnehmer beschreiben.

11. Engineering-Station nach einem der Ansprüche 8 bis 10, ausgestaltet um die Feldbusteilnehmer (Ctr,Dev) der Art IO-Controller oder IO-Device Art zu parametrieren und zu konfigurieren.

## Claims

1. Method for the configuration and parameterisation of fieldbus subscribers (Ctr,Dev) that are connected to one another via a fieldbus (F), wherein at least one first fieldbus subscriber (Dev) is designed so as to provide and/or to receive process data (10) and a second fieldbus subscriber (Ctr) is designed in order to allow a user program (AP) to run, wherein in
- a first step (S1) using a configuration tool (CT) a topology (Topo) having configuration parameters (CP) of the fieldbus subscribers (Ctr,Dev) is determined in a configuration file (CD), and in
- a second step (S2) the first fieldbus subscriber (Dev) is parameterised for later communication via the fieldbus (F) using at least one configuration data set (Dconf) comprising at least one first part (CD1) of the configuration file (CD), in
- a third step (S3) an object-oriented class (class) having elements (E) and functions (f) for the communication between the second fieldbus subscriber (Ctr) and the first fieldbus subscriber (Dev) is generated from the configuration file (CD) and further code parts (C1,...,C5) from a program library (PB), wherein in
- a fourth step (S4) the class (class) is instantiated in the user program (AP) of the second fieldbus subscriber (Ctr) and when the user program (AP) is being executed the functions (f) are used for the communication, whereby the access (Z) to the process data (IO) is rendered possible,
wherein
the fieldbus subscribers (Ctr,Dev) are divided into two of the following types,
an IO controller type for the second fieldbus subscriber (Ctr) and
an IO device type for the first fieldbus subscriber (Dev), wherein
- the IO controller type is the type of device that assumes control tasks and in which the user program (AP) is executed and
- the IO device type is the type of device that receives data as a field device from an industrial process or outputs data to an industrial process, wherein said device is controlled by the devices of the IO controller type, **characterised in that**
- using the configuration tool (CT) a mesh network topology (Masch-Topo) with the configuration parameters (CP) of the fieldbus subscribers (Ctr,Dev) is determined in a mesh configuration file (mCD), and wherein
- the generation of the class (class) is divided into a generation of a server class (SC) and into a generation of a client class (CC) and in
- fieldbus subscribers of the type IO controller the two classes (SC,CC) are instantiated in the user program (AP) and in the
- fieldbus subscribers of the type IO device at least the server class (SC) is instantiated.

2. Method according to claim 1, wherein the further code parts (C1,...,C5) comprise the following source code parts:
- a first source code part (C1) that comprises code and compile options for handling different second fieldbus subscribers (Ctr), wherein the second fieldbus subscribers (Ctr) are designed as a target platform of a different hardware specification,
- a second source code part (C2) that comprises code from interface descriptions of the first fieldbus subscriber (Dev),
- a third source code part (C3) that comprises code from interface descriptions regarding IO mapping classes of the first fieldbus subscriber (Dev),
- a fourth source code part (C4) that comprises code of description of the configurations and parameterisations of all the fieldbus subscribers (Ctr,Dev) with regard to device types, IO module types or IO submodule types,
- a fifth source code part (C5) that comprises code from descriptions of different protocol stacks for different types of fieldbus communications.

3. Method according to claim 1 or 2, wherein the configuration parameters (CP) are taken from a device master data file (GSD) for the individual fieldbus subscribers (C,D).

4. Method according to one of claims 1 to 3, wherein an embedding of a generated program code (G) and an instantiation is performed by means of a software development environment (IDE) .

5. Method according to one of claims 1 to 4, wherein
- in order to construct a mesh network architecture having a plurality of such devices, the fieldbus (F) that is already provided is used and
wherein, when the respective user program (AP1,...,AP4) is being executed in the respective fieldbus subscribers (Ctr,Dev), bidirectional communication is also implemented between the fieldbus subscribers (Ctr, Dev) of the IO controller type by the additional server class (SC) and the additional client class (CC).

6. Method according to claim 5, wherein during the determination of the topology (Topo) on the one hand
- a parallel and independent access (Z) of at least two different fieldbus subscribers (Ctr) of the type IO controller to the process data (IO) of the same fieldbus subscriber (Dev) of the type IO device is taken into consideration and on the other hand
- a free allocation of process data (IO) of arbitrary fieldbus subscribers (Dev) of the type IO device to fieldbus subscribers (Ctr) of the type IO controller
is taken into consideration and the mesh configuration file (mCD) is provided from this determination (configuration) and the server classes (SC) and the client classes (CC) having corresponding access rights and access paths are generated with the aid of said mesh configuration file.

7. Method according to one of claims 1 to 6, wherein the generated class (class) and in the case of generating subclasses the following construction and following performance features are generated for the classes, wherein the classes are preferably illustrated in a C++ notation:
- Class: user interface which is available at least once per fieldbus subscriber (Dev), user interface includes all access possibilities to IO modules/submodules of the fieldbus subscriber (Dev) comprising functions that allow an access via symbols that are clear station wide or an access via module slots as a whole or also in a bit granular manner, wherein links to operators can also be implemented,
- Class: user interface to IO mapping which is available at least once per fieldbus subscriber (Dev) and includes address data of the fieldbus subscriber (Dev) and which controls the exchange of data between a user interface class and a communication stack class,
- Class: communication stack which performs calls of communication methods or functions of a protocol stack and therefore assumes the communication setup to the fieldbus subscriber (Dev),
- Class: network stack which is generated once per fieldbus (F) and can be used equally by all the above mentioned classes, it is preferred that other communication stack classes can be embedded here.

8. Engineering station for the configuration and parameterisation of fieldbus subscribers (Ctr,Dev) that are connected to one another via a fieldbus (F), wherein at least one first fieldbus subscriber (Dev) is designed so as to provide and/or to receive process data (IO) and a second fieldbus subscriber (Ctr) is designed in order to allow a user program (AP) to run, wherein the engineering station has the following: a configuration tool (CT) that is designed so as in an editor to determine a topology (Topo) using configuration parameters (CP) of the fieldbus subscribers (Ctr,Dev) in a configuration file (CD),
a parameterisation tool (PT) that is designed so as to parameterise and to load the first fieldbus subscriber (Dev) for later communication via the fieldbus (F) using at least one configuration data set (Dconf) comprising at least a first part (CD1) of the configuration file (CD),
a program code generator (PCG) that is designed so as to generate from the configuration file (CD) and further code parts (C1, ..., C5) from a program library (PB) an object-oriented class (class) having elements (E) and functions (f) for the communication between the second fieldbus subscriber (Ctr) and the first fieldbus subscriber (Dev), wherein furthermore an
installation tool (S4) is provided that is designed so as to instantiate the class (class) in the user program (AP) of the second fieldbus subscriber (C) whereby when the user program (AP) is being executed the functions (f) for the communication are used and the access (Z) to the process data (IO) is consequently rendered possible,
wherein the fieldbus subscribers (Ctr,Dev) are divided into two of the following types,
an IO controller type for the second fieldbus subscriber (Ctr),
an IO device type for the first fieldbus subscriber (Dev), wherein
- the IO controller type is the type of device that assumes control tasks and in which the user program (AP) is executed and
- the IO device type is the type of device that receives data as a field device from an industrial process or outputs data to an industrial process, wherein said device is controlled by the devices of the IO controller type, **characterised in that** the
configuration tool (CT) is configured
to determine a mesh network topology (Masch-Topo) with the configuration parameters (CP) of the fieldbus subscribers (Ctr,Dev) in a mesh configuration file (mCD), and wherein it is provided that
the generation of the class (class) is divided into a
generation of a server class (SC) and into a generation of a client class (CC),
in the fieldbus subscriber of the type IO controller the two classes (SC,CC) are instantiated in the user program (AP) and
in the fieldbus subscriber of the type IO device at least the server class (SC) is instantiated.

9. Engineering station according to claim 8, wherein the program library (PB) comprises at least one of the following source code parts (C1,C2,C3,C4):
- a first source code part (C1) that comprises code and compile options for handling different second fieldbus subscribers (Ctr), wherein the second fieldbus subscribers (Ctr) are designed as a target platform of a different hardware specification,
- a second source code part (C2) that comprises code from interface descriptions of the first fieldbus subscriber (Dev),
- a third source code part (C3) that comprises code from interface descriptions regarding IO mapping classes of the first fieldbus subscriber (Dev),
- a fourth source code part (C4) that comprises code of description of the relationships between the above mentioned code parts and the configurations or parameterisations of all the fieldbus subscribers (Ctr,Dev) with regard to device types, IO module types or IO submodule types,
- a fifth source code part (C5) that comprises code from descriptions of different protocol stacks for different types of fieldbus communications.

10. Engineering station according to claim 8 or 9, wherein the program library (PB) comprises device master data files (GSD) for the individual fieldbus subscriber (C,D) and said device master data files describe characteristic communication features of the fieldbus subscribers.

11. Engineering station according to one of claims 8 to 10, designed in order to parameterise and to configure the fieldbus subscribers (Ctr,Dev) of the type IO controller or IO device type.

## Revendications

1. Procédé de configuration et de paramétrage de participants (Ctr, Dev) à un bus sur site, qui sont en liaison les uns avec les autres par un bus (F) sur site, dans lequel au moins un premier participant (Dev) au bus sur site est conformé pour mettre à disposition et/ou pour recevoir des données (IO) de processus, et un deuxième participant (Ctr) au bus sur site est conformé pour faire se dérouler un programme (AP) utilisateur, dans lequel
- dans un premier stade (S1) on fixe, dans un fichier (CD) de configuration, par un outil (CT) de configuration, une topologie (Topo) ayant des paramètres (CP) de configuration des participants (Ctr, Dev) au bus sur site, et
- dans un deuxième stade (S2) on paramétrise le premier participant (Dev) au bus sur site, pour une communication ultérieure par le bus (F) sur site, par au moins un ensemble (Dconf) de données de configuration comprenant au moins une première partie (CD1) du fichier (CD) de configuration,
- dans un troisième stade (S3) on produit, à partir du fichier (CD) de configuration et d'autres parties (C1, ..., C5) de code d'une bibliothèque (PB) de programme, une classe (class) orientée objet ayant des éléments (E) et des fonctions (f) pour la communication entre le deuxième participant (Ctr) au bus sur site et le premier participant (Dev) au bus sur site, dans lequel
- dans un quatrième stade (S4) on instance la classe (class) dans le programme (AP) utilisateur du deuxième participant (Ctr) au bus sur site et, lors de la réalisation du programme (AP) utilisateur, on utilise les fonctions (f) pour la communication, grâce à quoi l'accès (Z) aux données (IO) de processus est rendu possible,
dans lequel
on subdivise les participants (Ctr, Dev) au bus sur site en deux des types suivants,
un type de contrôleur IO pour le deuxième participant (Ctr) au bus sur site et
un type de dispositif IO pour le premier participant (Dev) au bus sur site
dans lequel
- le type contrôleur IO est le type d'appareil, qui prend en charge des tâches de commande et les fait se dérouler dans le programme (AP) utilisateur, et
- le type dispositif IO est le type d'appareil, qui reçoit comme appareil sur site d'un processus industriel des données ou qui envoie des données à un processus industriel, dans lequel il est contrôlé par les appareils de type contrôleur IO,
**caractérisé en ce que**
- on fixe, dans un fichier (mCD) de configuration à maille, par l'outil (CT) de configuration, une topologie (Masch-topo) de réseau à maille ayant les paramètres (CP) de configuration des participants (Ctr, Dev) au bus sur site, et dans lequel
- on subdivise la production des classes (class) en une production d'une classe (SC) de serveur et en une production d'une class (CC) de client, et
- dans les participants au bus sur site du type contrôleur IO, dans le programme (AP) utilisateur, on instance les deux classes (SC, CC), et
- dans les participants au bus sur site du type dispositif IO, on instance au moins la classe (SC) serveur.

2. Procédé suivant la revendication 1, dans lequel les autres parties (C1, ..., C5) de code comprennent des parties de code source suivantes :
- une première partie (C1) de code source, qui comprend un code et des options compile de manipulation de deuxièmes participants (Ctr) au bus sur site différents, dans lequel les deuxièmes participants (Ctr) au bus sur site sont conformés sous la forme d'une plateforme cible d'empreinte hardware différente,
- une deuxième partie (C2) de code source, qui comprend un code de description d'interface du premier participant (Dev) au bus sur site,
- une troisième partie (C3) de code source, qui comprend un code de description d'interface se rapportant à des classes de mapping IO du premier participant (Dev) au bus sur site,
- une quatrième partie (C4) de code source, qui comprend un code d'une description par les configurations et les paramétrages de tous les participants (Ctr, Dev) au bus sur site en ce qui concerne les types de dispositifs, les types de modules IO, ou les types de sous-modules IO,
- une cinquième partie (C5) de code source, qui comprend un code de description de piles de protocole différentes pour des types différents de communication de bus sur site.

3. Procédé suivant la revendication 1 ou 2, dans lequel on prend les paramètres (CP) de configuration d'un fichier (GSD) de données d'origine d'appareils pour les divers participants (C, D) pour bus sur site.

4. Procédé suivant l'une des revendications 1 à 3, dans lequel on effectue une incorporation d'un code (G) de programme produit et une instanciation au moyen d'un environnement (IDE) de développement de logiciel.

5. Procédé suivant l'une des revendications 1 à 4, dans lequel
- pour l'établissement d'une architecture de réseau à maille, on utilise une pluralité d'appareils de ce genre du bus (F) sur site déjà présent, et
dans lequel, lors de la réalisation des programmes (AP1, ..., AP4) d'utilisateurs respectifs, on effectue, dans les participants (Ctr, Dev) au bus sur site respectif, seulement par la classe (SC) de serveur supplémentaire et la classe (CC) de client supplémentaire également une communication bidirectionnelle entre les participants (Ctr, Dev) au bus sur site du type contrôleur IO.

6. Procédé suivant la revendication 5, dans lequel, lors de la fixation de la topologie (Topo), d'une part on prend en compte
- un accès (Z) parallèle et indépendant d'au moins deux participants (Ctr) différents au bus sur site du type contrôleur IO, aux données (IO) de processus du même participant (Dev) au bus sur site du type dispositif IO, et d'autre part
- une association libre de données (IO) de processus de n'importe quel participant (Dev) au bus sur site du type dispositif IO aux participants (Ctr) au bus sur site du type contrôleur IO et, à partir des fichiers (mCD) de configuration à maille ainsi fixés, on produit les classes (SC) de serveur et la classe (CC) de client avec des droits d'accès correspondants et des trajets d'accès correspondants.

7. Procédé suivant l'une des revendications 1 à 6, dans lequel on produit la classe (class) produite et, lors d'une production de sous-classes d'une structure suivante et des caractéristiques de puissance pour les classes, dans lequel on représente les classes de préférence dans une notation C++ :
- classe : interface utilisateur, qui est disponible au moins une fois par participant (Dev) au bus sur site, elle contient toutes les possibilités d'accès à des fonctions comprenant des modules / sous-modules IO du participant (Dev) au bus sur site, qui autorisent un accès, par des symboles univoques dans beaucoup de postes à un accès par des emplacements à enfichage de module dans l'ensemble, ou également par bigranularité, des combinaisons pouvant être effectuées aussi par des opérateurs,
- classe : interface utilisateur avec mapping IO, qui est disponible au moins une fois par participant (Dev) au bus sur site, qui contient des données d'adresse du participant (Dev) au bus sur site et qui commande l'échange de données entre la classe d'interface utilisateur et une classe pile de communication,
- classe : pile de communication, qui effectue des appels de méthodes ou de fonctions de communication d'une pile de protocole et prend en charge ainsi l'établissement de communications avec le participant (Dev) au bus sur site,
- classe : pile de réseau, qui est produite une fois par bus (F) sur site, et qui peut être utilisée de la même façon par toutes les classes mentionnées précédemment, de préférence d'autres classes pile de communication peuvent être incorporées ici.

8. Poste d'ingénierie pour la configuration et le paramétrage de participants (Ctr, Dev) à un bus sur site, qui sont en liaison entre eux par un bus (F) sur site, dans lequel au moins un premier participant (Dev) au bus sur site est conformé pour mettre à disposition et/ou recevoir des données (IO) de processus, et un deuxième participant (Ctr) au bus sur site est conformé pour faire se dérouler un programme (AP) utilisateur, le poste d'ingénierie ayant ce qui suit :
un outil (CT) de configuration, qui est conformé pour, dans un fichier (CD) de configuration, fixer dans un éditeur une topologie (Topo) ayant des paramètres (CP) de configuration des participants (Ctr, Dev) au bus sur site, un outil (PT) de paramétrage, qui est conformé pour paramétrer et pour charger le premier participant (Dev) au bus sur site pour une communication ultérieure par le bus (F) sur site avec au moins un ensemble (Dconf) de données de configuration comprenant au moins une première partie (CD1) du fichier (CD) de configuration,
un générateur (PCG) de code de programme, qui est conformé pour produire, à partir du fichier (CD) de configuration et d'autres parties (C1, .., C5) de code d'une bibliothèque (PB) de programme,
une classe (class) à orientation objet comprenant des éléments (E) et des fonctions (f) pour la communication entre le deuxième participant (Ctr) au bus sur site et le premier participant (Dev) au bus sur site,
dans lequel en outre
il y a un outil (S4) d'installation, qui est conformé pour instancier la classe (class) dans le programme (AP) utilisateur du deuxième participant (C) au bus sur site, grâce à quoi, lors de la réalisation du programme (AP) d'utilisateur, il est utilisé les fonctions (f) pour la communication et l'accès (Z) aux données (IO) de processus est rendu ainsi possible,
dans lequel les participants (Ctr, Dev) au bus sur site sont subdivisés en deux des types suivants
un type de contrôleur IO pour le deuxième participant (Ctr) au bus sur site et
un type de dispositif IO pour le premier participant (Dev) au bus sur site
dans lequel
- le type contrôleur IO est le type d'appareil, qui prend en charge des tâches de commande et les fait se dérouler dans le programme (AP) utilisateur, et
- le type dispositif IO est le type d'appareil, qui reçoit comme appareil sur site d'un processus industriel des données ou qui envoie des données à un processus industriel, dans lequel il est contrôlé par des appareils de type contrôleur IO,
**caractérisé en ce que**
l'outil (CT) de configuration est conçu pour, dans un fichier (mCD) de configuration de maille, fixer une topologie (Masch-Topo) de réseau à maille ayant les paramètres (CP) de configuration des participants (Ctr, Dev) au bus sur site,
et dans lequel il est prévu que la production des classes (class) soit subdivisée en une production d'une classe (CS) serveur et en une production d'une classe (CC) client,
**en ce que**, dans le participant au bus sur site du type contrôleur IO, on instance les classes (SC, CC) dans le programme (AP) utilisateur,
**en ce que**, dans le participant au bus sur site du type dispositif IO, on instance au moins la classe (SC) serveur.

9. Poste d'ingénierie suivant la revendication 8, dans lequel la bibliothèque (PB) de programme comprend au moins l'une des parties (C1, C2, C3, C4) de code source suivantes :
- une première partie (C1) de code source, qui comprend un code et des options compile de manipulation de deuxièmes participants (Ctr) au bus sur site différents, dans lequel les deuxièmes participants (Ctr) au bus sur site sont conformés sous la forme d'une plateforme cible d'empreinte hardware différente,
- une deuxième partie (C2) de code source, qui comprend un code de description d'interface du premier participant (Dev) au bus sur site,
- une troisième partie (C3) de code source, qui comprend un code de description d'interface se rapportant à des classes de mapping IO du premier participant (Dev) au bus sur site,
- une quatrième partie (C4) de code source, qui comprend un code d'une description par les configurations et les paramétrages de tous les participants (Ctr, Dev) au bus sur site en ce qui concerne les types de dispositifs, les types de modules IO, ou les types de sous-modules IO,
- une cinquième partie (C5) de code source, qui comprend un code de description de piles de protocole différentes pour des types différents de communication de bus sur site.

10. Poste d'ingénierie suivant la revendication 8 ou 9, dans lequel la bibliothèque (PB) de programme comprend des fichiers (GSD) d'origine d'appareil pour les divers participants (C, D) au bus sur site, qui décrivent des caractéristiques de communication des participants au bus sur site.

11. Poste d'ingénierie suivant l'une des revendications 8 à 10, conformé pour paramétrer et configurer les participants (Ctr, Dev) au bus sur site du type contrôleur IO ou du type dispositif IO.
